# EUROPÄISCHE PATENTANMELDUNG

(11) **EP 2 818 791 A1**
(43) Veröffentlichungstag der Anmeldung: **31.12.2014**
(21) Anmeldenummer: 14170653.1
(22) Anmeldetag: 30.05.2014
(51) Int. Cl.: F21S 8/10, F21V 5/04, F21V 8/00

(54) **Kraftfahrzeugbeleuchtungseinrichtung mit einer Einkoppeloptik und einer Transport- und Umformoptik**

(30) Priorität: 26.06.2013 DE 102013212352
(71) Anmelder: Automotive Lighting Reutlingen GmbH, 72762 Reutlingen (DE)
(72) Erfinder: Gebauer, Matthias, 72770 Reutlingen (DE); Schott, Dominik, 72119 Ammerbuch (DE)
(74) Vertreter: DREISS Patentanwälte PartG mbB

(57) **Zusammenfassung**

Vorgestellt wird eine Kraftfahrzeugbeleuchtungseinrichtung mit einer Lichtquelle und einer Lichtleiteranordnung, die eine Einkoppeloptik und eine Transport- und Umformoptik aufweist. Die Einkoppeloptik weist eine Lichtbündel formende und im Raum gekrümmte Fläche auf, welche den Öffnungswinkel des Lichtes in zweiten Schnittebenen beim Durchtritt durch diese Fläche reduziert. Die Transport- und Umformoptik weist einen gemeinsamen Brennpunkt aufweisende Umformoptiken auf. Die Lichtquelle ist im gemeinsamen Brennpunkt angeordnet. Die Beleuchtungseinrichtung zeichnet sich insbesondere dadurch aus, dass die Lichtquelle an einer der Lichtaustrittsfläche gegenüberliegenden Seite der Lichtleiteranordnung so angeordnet ist, dass sämtliche Licht der Lichtquelle leitenden Bereiche zwischen der Lichtquelle und der Lichtaustrittsfläche liegen und die eine ebene Umlenkfläche zwischen den im Raum gekrümmten Flächen der Einkoppeloptik und den Umformoptiken angeordnet ist.

## Beschreibung

Die vorliegende Erfindung betrifft eine Kraftfahrzeugbeleuchtungseinrichtung nach dem Oberbegriff des Anspruchs 1.

Eine solche Kraftfahrzeugbeleuchtungseinrichtung wird als per se bekannt vorausgesetzt und weist eine Lichtquelle und eine Lichtleiteranordnung auf, die eine Einkoppeloptik und eine Transport- und Umformoptik aufweist. Die Transport-und Umformoptik weist eine Lichtaustrittsfläche auf, und die Einkoppeloptik ist dazu eingerichtet, ein von der Lichtquelle ausgehendes Lichtbündel umzuformen und zur Transport- und Umformoptik zu richten. Die Einkoppeloptik weist wenigstens eine Lichtbündel formende und im Raum gekrümmte Fläche auf, die in ersten Schnittebenen halbkreisförmige Ränder besitzt, deren Mittelpunkte auf einer Achse liegen, auf der auch die Lichtquelle angeordnet ist, und welche wenigstens eine Fläche in zweiten Schnittebenen eine linsenförmige Kontur aufweist, welche den Öffnungswinkel des Lichtes in diesen zweiten Schnittebenen beim Durchtritt durch diese Fläche reduziert. Die Transport- und Umformoptik weist Umformoptiken auf, mit denen der Öffnungswinkel des sich ursprünglich in den ersten Ebenen ausbreitenden Lichtes vor dem Auftreffen auf die Lichtaustrittsfläche verringert wird.

Ein Lichtleiter, der diese Merkmale aufweist, ist zum Beispiel aus der DE 199 25 263 A1 bekannt.

Der bekannte Lichtleiter ist plattenförmig und besitzt ausgedehnte, parallel zueinander liegende Grenzflächen und schmale Seitenflächen, welche die plattenförmigen Grenzflächen miteinander verbinden. Eine der schmalen Seitenflächen dient als Lichtaustrittsfläche, die sich in einem Ausführungsbeispiel über die gesamte Breite der Lichtleiterplatte erstreckt und daher eine langgestreckt rechteckige und damit bandförmige Form besitzt.

Die Einkoppeloptik ist bei dem bekannten Lichtleiter eine Ausnehmung in der Form eines runden Loches in der Lichtleiterplatte. Die als Lichteintrittsfläche des Lichtleiters dienende Grenzfläche dieser Ausnehmung weist eine nicht-rotationssymmetrische Form auf. Im Inneren der Ausnehmung ist eine Lichtquelle angeordnet.

Um eine parallele Lichtausbreitung im Lichtleiter in einer zur Lichtaustrittsfläche weisenden Richtung zu erzielen, sieht der bekannte Gegenstand vor, dass ein der bandförmigen Lichtaustrittsseite gegenüberliegender Reflektor in zu den ausgedehnten Plattenflächen parallelen Ebenen parabelförmige Konturen besitzt und senkrecht dazu eine prismenartige Kontur besitzt, welche einfallendes Licht zweimal umlenkt, so dass das umgelenkte Licht in Richtung zur Lichtaustrittsfläche propagiert. Die Lichtquelle ist im Brennpunkt der Parabelkontur angeordnet. Im Ergebnis lenkt der Reflektor das mit einem großen Öffnungswinkel auf ihn einfallende Licht damit als in den genannten Ebenen paralleles Licht auf die dem Reflektor gegenüber liegende bandförmige Lichtaustrittsfläche.

Ein großer Nachteil dieses Lichtleiters besteht darin, dass direkt in den der Lichtaustrittsfläche zugewandten Halbraum radial abgestrahltes Licht der Lichtquelle nicht auf den ersten Reflektor trifft und daher nicht parallel ausgerichtet wird. Für eine Verwendung in Beleuchtungseinrichtungen von Kraftfahrzeugen, sei es für Scheinwerferlichtfunktionen oder für Signallichtfunktionen, wird jedoch eine vom Inneren des Lichtleiters her mit möglichst parallelem Licht beleuchtete und möglichst homogen (gleichmäßig hell) leuchtende Lichtaustrittsfläche gewünscht. Solches Licht hat z.B. den Vorteil dass es sich durch Streuoptiken in der Lichtaustrittsfläche und/oder durch im Strahlengang des aus der Lichtaustrittsfläche ausgetretenen Lichtes nachfolgende Optiken besonders einfach in regelkonforme Lichtverteilungen verteilen lässt. Aus gestalterischen Gesichtspunkten wird darüber hinaus ein Lichtleiter gewünscht, der eine bandförmige Lichtaustrittsfläche mit einem großem Verhältnis der Länge der Lichtaustrittsfläche zu ihrer Breite besitzt und diese Anforderungen (Homogenität, Parallelität) erfüllt.

Diese Aufgabe wird mit den Merkmalen des Anspruchs 1 gelöst. Die vorliegende Erfindung unterscheidet sich von dem eingangs genannten Stand der Technik dadurch, dass die Lichtquelle an einer der Lichtaustrittsfläche gegenüberliegenden Seite der Lichtleiteranordnung so angeordnet ist, dass sämtliche Licht der Lichtquelle leitenden Bereiche der Lichtleiteranordnung zwischen der Lichtquelle und der Lichtaustrittsfläche liegen und die Lichtleiteranordnung eine ebene Umlenkfläche aufweist die zwischen den im Raum gekrümmten Flächen der Einkoppeloptik und den Umformoptiken angeordnet ist.

Beim Stand der Technik liegt die Lichtquelle dagegen innerhalb des Lichtleiters so, dass sie den Lichtleiter in einen zwischen der Lichtquelle und der Lichtaustrittsfläche liegenden ersten Teil und einen zweiten Teil aufteilt, der zwischen einem der Lichtaustrittsfläche abgewandten Ende des Lichtleiters und der Lichtquelle liegt. Aus dieser Lage resultieren die oben genannten Nachteile, weil das Licht, das sich im ersten Teil ausbreitet, nicht oder anders umgeformt wird als das Licht, das sich im zweiten Teil ausbreitet und durch den parabelförmigen Dachkantenreflektor eine Richtungsumkehr und Parallelisierung erfährt.

Bei der Erfindung tritt dagegen alles Licht der Lichtquelle in das gleiche Lichtleitervolumen ein und kann nachfolgend mit gleichen Umformoptiken umgeformt werden, ohne dass ein Teil des Lichtes dazu eine Richtungsumkehr erfahren muss. Durch die ebene Umlenkfläche wird die Richtung der Lichteinkopplung unabhängig von der Richtung der Lichtaustrittsfläche, so dass die Lage der Lichtquelle mit ihrer Hauptabstrahlrichtung auch bei festgelegter Lage der Lichtaustrittsfläche relativ frei im Raum positioniert werden kann. Der Umstand, dass die Umlenkfläche eine ebene Fläche ist, hat den Vorteil dass das Lichtbündel als Ganzes umgelenkt wird, ohne dass dabei die Winkelverteilung der Lichtstrahlen innerhalb des Bündels verändert wird. Das hat den Vorteil, dass die im Strahlengang nachfolgenden Umformoptiken auch bei einer konstruktiven Anpassung des Umlenkwinkels an andere Bauraumverhältnisse nicht verändert werden müssen.

Eine bevorzugte Ausgestaltung zeichnet sich dadurch aus, dass die Lichtbündel formende und im Raum gekrümmte Fläche in ersten Schnittebenen halbkreisförmige Ränder besitzt, deren Mittelpunkte auf einer Achse liegen, auf der auch die Lichtquelle angeordnet ist, und welche Flächen in zweiten Schnittebenen eine linsenförmige Kontur aufweisen.

Bevorzugt ist auch, dass die Einkoppeloptik eine Linse aufweist und die Lichtaustrittsfläche der Linse eine solche Lichtbündel formende und im Raum gekrümmte Flächen ist.

Bevorzugt ist auch, dass die Einkoppeloptik eine Vorsatzoptik mit einer zentralen Lichteintrittsfläche, seitlichen Lichteintrittsflächen und seitlichen Reflexionsflächen aufweist, wobei die zentrale Lichteintrittsfläche eine solche Lichtbündel formende und im Raum gekrümmte Flächen ist.

Eine bevorzugte Ausgestaltung zeichnet sich dadurch aus, Kraftfahrzeugbeleuchtungseinrichtung nach einem der vorhergehenden Ansprüche, dadurch gekennzeichnet, dass die Einkoppeloptik eine Vorsatzoptik mit einer zentralen Lichteintrittsfläche, seitlichen Lichteintrittsflächen und seitlichen Reflexionsflächen aufweist, wobei auch die seitliche Reflexionsfläche eine solche Lichtbündel formende und im Raum gekrümmte Fläche ist.

Bevorzugt ist auch, dass die Einkoppeloptik und die Transport- und Umformoptik einstückig-stoffschlüssig zusammenhängende Bestandteile der Lichtleiteranordnung sind.

Alternativ ist bevorzugt, dass die Einkoppeloptik und die Transport- und Umformoptik separate Komponenten sind, die zur Lichtleiteranordnung lösbar oder unlösbar zusammengefügt sind.

Bevorzugt ist auch, dass die Umlenkfläche ein Bestandteil einer separaten Einkoppeloptik-Komponente der Lichtleiteranordnung ist.

Ferner ist bevorzugt, dass die Umlenkfläche ein Bestandteil einer separaten separaten Transport- und Umformoptik-Komponente der Lichtleiteranordnung ist.

Bevorzugt ist auch, dass die Umformoptiken eine zentrale Luftlinse aufweisen und/oder als parabelförmige und intern totalreflektierende Grenzflächen innerer Ausnehmungen und/oder als parabelförmige und intern totalreflektierende Außenreflektoren verwirklicht sind.

Eine weitere bevorzugte Ausgestaltung zeichnet sich dadurch aus, dass sämtliche Umformoptiken den gleichen Brennpunkt besitzen.

Bevorzugt ist auch, dass die Lichtaustrittsfläche eingeformte Streuoptiken aufweist.

Bevorzugt ist auch, dass die Form eines räumlichen Vorsatzoptikprofils durch Extrudieren eines flächigen Vorsatzoptikprofils erzeugt wird.

Ferner ist bevorzugt, dass die Form eines räumlichen Vorsatzoptikprofils durch Rotieren eines flächigen Vorsatzoptikprofils erzeugt wird.

Eine bevorzugte Ausgestaltung zeichnet sich dadurch aus, Kraftfahrzeugbeleuchtungseinrichtung nach einem der vorhergehenden Ansprüche, dadurch gekennzeichnet, dass eine als Umformoptik dienende innere Luftlinse als Fresnel-Linse verwirklicht ist.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
Figur 1 ein Ausführungsbeispiel einer erfindungsgemäßen Beleuchtungseinrichtung in einem Längsschnitt;
Figur 2 Figur 2 einen Querschnitt einer Einkoppeloptik 16;
Figur 3 verschiedene Ansichten einer Lichtleiteranordnung vom Typ der in den Figuren 1 und 2 dargestellten Gegenstände;
Figur 4 eine Ausgestaltung einer Lichtleiteranordnung mit einer Linse als Einkoppeloptik;
Figur 5 eine perspektivische Ansicht einer eine Linse als Einkoppeloptik aufweisenden Lichtleiteranordnung;
Figur 6 verschiedene Ansichten des Gegenstands der Figur 5;
Figur 7 eine perspektivische Ansicht einer Lichtleiteranordnung, die eine Einkoppeloptik mit einem Vorsatzoptikprofil aufweist;
Figur 8 eine alternative Ausgestaltung einer Lichtleiteranordnung mit einem Vorsatzoptikprofil;
Figur 9 eine bevorzugte Ausgestaltung einer Lichtleiteranordnung in perspektivischer Ansicht, mit einer Fresnel-Luft-Linse als Umformoptik;
Figur 10 Ausgestaltungen separater Einkoppelmodule, die sich durch eine gestufte Lichtaustrittsfläche auszeichnen;
Figur 11 eine abschnittsweise gekrümmte Ausführung der Lichtaustrittsfläche, die durch Aneinanderreihung vieler Lichtaustrittsflächen einzelner Lichtleiteranordnungen erzeugt wird;
Figur 12 eine Ausgestaltung, die mit einem vorsatzoptikartigen Einkoppelmodul und entsprechender Umlenkung eine gebogene Platte homogen ausleuchtet; und
Figur 13 eine Lichtleiterplatte, die teilweise gebogen und teilweise eben ist.

Gleiche Bezugszeichen in verschiedenen Figuren bezeichnen dabei jeweils gleiche oder zumindest ihrer Funktion nach vergleichbare Elemente.

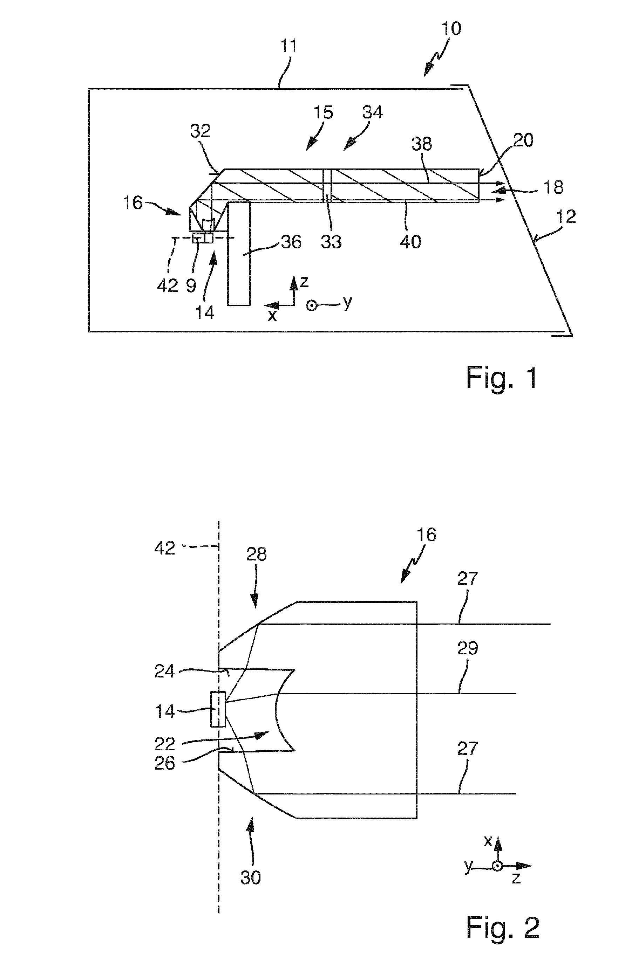

Figur 1 zeigt eine Kraftfahrzeugbeleuchtungseinrichtung 10 mit einem Gehäuse 11, dessen Lichtaustrittsöffnung von einer transparenten Abdeckscheibe 12 abgedeckt wird. Im Innenraum des Gehäuses befindet sich eine im Gehäuse ortsfest gehaltene Lichtquelle 14 und eine Lichtleiteranordnung 15 mit einer Einkoppeloptik 16 und einer Transport- und Umformoptik 18. Sowohl die Einkoppeloptik 16 als auch die Transport- und Umformoptik 18 bestehen zumindest in ihren Licht der Lichtquelle 18 leitenden Bereichen aus einem transparenten Lichtleitermaterial wie PC, PMMA, Glas, COC oder einem ähnlichen transparenten Material.

Die Transport- und Umformoptik 18 weist an einem Ende eine Lichtaustrittsfläche 20 auf. Die Lichtquelle 14 ist bevorzugt eine Halbleiterlichtquelle, insbesondere eine Leuchtdiode oder eine Anordnung aus mehreren Leuchtdioden. Jede einzelne Leuchtdiode besitzt bevorzugt eine ebene Lichtaustrittsfläche. Die Lichtaustrittsflächen sind bevorzugt rechteckig und weisen eine Kantenlänge von etwa 0,3 mm bis 2 mm auf. Eine Leuchtdiode mit einer solchen Lichtaustrittsfläche kann als Lambertstrahler betrachtet werden, der eine senkrecht zur Lichtaustrittsfläche der Leuchtdiode gerichtete Hauptabstrahlrichtung besitzt und der im Übrigen einen breit geöffneten Lichtkegel in den oberhalb der Lichtaustrittsfläche liegenden Halbraum strahlt. Die Leuchtdioeden können Licht gleicher Farbe erzeugen. In einer anderen Ausgestaltung erzeugen verschiedene Leuchtdioden Licht mit unterschiedlichen Farben, wobei jeweils eine Leuchtdiode Licht einer Farbe erzeugt.

Die Lichtleiteranordnung 15 ist dazu eingerichtet, dieses breit geöffnete Lichtbündel auseinander laufender Lichtstrahlen in ein Bündel möglichst parallel ausgerichteter Lichtstrahlen 11, 13 umzuformen und diese Lichtstrahlen möglichst gleichmäßig dicht auf die Lichtaustrittsfläche 20 zu verteilen. Das Ziel besteht darin, diese Lichtaustrittsfläche 20 mit parallelem Licht möglichst homogen von innen auszuleuchten. Mit Hilfe von Streuoptiken kann ein solches Lichtbündel leicht in eine regelkonforme Lichtverteilung umgeformt werden, die bei einer bestimmungsgemäßen Verwendung der Beleuchtungseinrichtung als Signalleuchte eines Kraftfahrzeugs eine horizontale Winkelbreite von +/- 20°C und eine vertikale Winkelbreite von +/- 10°C besitzt. Solche Streuoptiken sind in einer Ausgestaltung als in die Lichtaustrittsfläche 20 eingeformte kissenförmige oder zylindermantelabschnittsförmige Strukturen verwirklicht.

Bei der bestimmungsgemäßen Verwendung ist die x-Richtung, die der Hauptabstrahlrichtung der Lichtaustrittsfläche 20 entspricht, parallel zu einer Vorwärtsfahrtrichtung oder Rückwärtsfahrtrichtung eines Kraftfahrzeugs, während die y-Richtung parallel zur Querachse und die z-Richtung parallel zur Hochachse des Fahrzeugs ausgerichtet ist. Im Folgenden wird zunächst unter Bezug auf die Figur 2 eine Ausgestaltung einer Einkoppeloptik 16 erläutert.

Figur 2 zeigt einen Querschnitt einer Einkoppeloptik 16, der in der x-, z-Ebene liegt. Die Einkoppeloptik 16 ist hier eine sogenannte Vorsatzoptik. Sie weist eine zentrale Lichteintrittsfläche 22, seitliche Lichteintrittsflächen 24, 26 und seitliche Reflexionsflächen 28, 30 auf. Die zentrale Lichteintrittsfläche 22 liegt quer zur Hauptabstrahlrichtung einer Lichtquelle 14, und die seitlichen Lichteintrittsflächen liegen eher parallel als quer zu dieser Hauptabstrahlrichtung. Die seitlichen Reflexionsflächen 28, 30 sind so angeordnet, dass sie von Licht beleuchtet werden, das über die seitlichen Lichteintrittsflächen 24, 26 in die Einkoppeloptik 16 eintritt.

Die Form und Anordnung der seitlichen Reflexionsflächen 28, 30 ist darüber hinaus so festgelegt, dass das dort einfallende Licht 27 der Lichtquelle 14 dort interne Totalreflexionen erfährt und das dort reflektierte Licht parallel ausgerichtet und parallel zu dem über die zentrale Lichteintrittsfläche 22 eingetretenen Licht 29 ist. In einer Ausgestaltung sind die Reflexionsflächen mit einer spiegelnden Beschichtung versehen. Bevorzugt ist jedoch eine Verwirklichung ohne eine solche Beschichtung, da solche Beschichtungen aufwändig herzustellen und damit teuer sind. Dies gilt für alle in dieser Anmeldung erwähnten Spiegelflächen. Außerdem treten bei internen Totalreflexionen geringere Lichtverluste auf. Die zentrale Lichteintrittsfläche 22 besitzt eine linsenförmige Kontur und reduziert den Öffnungswinkel des durch diese Fläche hindurchtretenden Lichtes. Die Öffnungswinkelreduzierung erfolgt bevorzugt so, dass das eingekoppelte Licht in der Zeichnungsebene parallel ausgerichtet ist.

Die folgende Erläuterung bezieht sich wieder auf die Figur 1. Die Lichtleiteranordnung weist eine ebene Umlenkfläche 32 auf. Die Transport- und Umformoptik 18 weist Umformoptiken 34 auf. Die Umformoptik 34 ist z. B. eine Luftlinse 33 im Inneren der Transport- und Umformoptik. Im dargestellten Beispiel besitzt die Luftlinse in der Propagationsrichtung des Lichtes eine konkav-plane Form. Unabhängig von ihrer speziellen Ausführung muss die Form die Anforderung erfüllen, dass die Luftlinse das von der Umlenkfläche 32 zur Lichtaustrittsfläche 20 propagierende Licht in eine quer zur Zeichnungsebene liegenden Richtung parallelisiert. Dabei wird unter einer Parallelisierung eine Verkleinerung des Öffnungswinkels verstanden. Es ist bevorzugt, dass die Parallelisierung in einem Ausmaß erfolgt, dass zu einem in dieser Richtung parallelen Lichtbündel führt.

Als Umformoptiken kommen auch reflektierende Flächen von im Inneren der Transport- und Umformoptik liegenden Ausnehmungen in Frage. Solche Flächen sind bevorzugt parabelförmig. Alternativ oder ergänzend kommen auch reflektierende und bevorzugt parabelfömige Außenflächen der Transport- und Umformoptik 18 in Frage. Die Umformoptiken weisen bevorzugt einen gemeinsamen Brennpunkt auf. Die Lichtquelle ist bevorzugt in dem gemeinsamen Brennpunkt angeordnet. In der dargestellten Ausgestaltung sind die Einkoppeloptik 16 und die Transport- und Umformoptik 18 einstückig-stoffschlüssig zusammenhängende Bestandteile der Lichtleiteranordnung 15. Diese Einstückigkeit ist aber nicht obligatorisch. Beide Bestandteile sind in anderen Ausgestaltungen separate Komponenten, die zur Lichtleiteranordnung lösbar oder unlösbar zusammengefügt sind. Die Umlenkfläche kann sowohl als Bestandteil einer separaten Einkoppeloptik-Komponente, als auch als Bestandteil einer separaten Transport- und Umformoptik-Komponente verwirklicht sein.

Die Lichtquelle 14 ist an einer der Lichtaustrittsflächen 20 gegenüberliegenden Seite, insbesondere an einem der Lichtaustrittsflächen 20 gegenüberliegenden Ende der Lichtleiteranordnung so angeordnet, dass sämtliche Bereiche der Lichtleiteranordnung, die an der Beleuchtung der Lichtaustrittsfläche beteiligtes Licht der Lichtquelle 14 führen, zwischen der Lichtquelle und der Lichtaustrittsfläche liegen. Dies schließt z. B. Ausgestaltungen mit Dachkantenreflektoren aus, wie sie bei dem eingangs genannten Stand der Technik verwendet werden. Die ebene Umlenkfläche liegt zwischen der im Raum gekrümmten Fläche der Einkoppeloptik und den Umformoptiken. Ein Befestigungsstift 36 dient zur Halterung der Lichtleiteranordnung in dem Gehäuse 11. Die Lichtleiteranordnung weist weitere Halterungstrukturen 9 auf.

Figur 1 zeigt einen über die zentrale Lichteintrittsfläche der Einkoppeloptik 16 in diese Einkoppeloptik eintretenden Lichtstrahl 38 und einen über eine seitliche Lichteintrittsfläche in die Einkoppeloptik eintretenden Lichtstrahl 40. Beide Lichtstrahlen 38, 40 werden über die ebene Umlenkfläche 32 auf die Lichtaustrittsfläche 20 der Lichtleiteranordnung gerichtet. Die Einkoppeloptik ist insofern dazu eingerichtet, ein von der Lichtquelle ausgehendes Lichtbündel umzuformen und zur Transport- und Umformoptik zu richten. Da die Umlenkfläche 32 eine ebene Fläche ist, lenkt sie das einfallende Bündel als Ganzes um, ohne die Winkelverteilung der einzelnen Strahlen des Bündels in Bezug aufeinander zu ändern. Die reflektierten Strahlen sind also wieder parallele Strahlen.

In einer bevorzugten Ausgestaltung ergeben sich die lichtumformenden Flächen 22, 28 und 30 der Einkoppeloptik im Raum durch Rotieren des in der Figur 2 sichtbaren Querschnitts um die Rotationsachse 42 in der Fig. 1 und Fig. 2, die durch die Lichtaustrittsfläche der Lichtquelle 14 geht und die senkrecht zur Hauptabstrahlrichtung der Lichtquelle 14 liegt. Die Rotation erfolgt dabei jeweils um 90° in die Zeichnungsebene hinein und um 90° aus der Zeichnungsebene heraus. Eine solche Einkoppeloptik parallelisiert das Licht der Lichtquelle nicht nur in der Zeichnungsebene, sondern in allen möglichen Ebenen, die von der Rotationsachse und einem von der Rotationsachse ausgehenden Radius aufgespannt wird. Solche Ebenen werden im Folgenden auch als Radialebenen bezeichnet.

Der Gegenstand der Figuren 1 und 2 parallelisiert durch seine lichtbrechende und Licht intern totalreflektierende Wirkung das von der Lichtquelle abgestrahlte und in die Lichtleiteranordnung eingekoppelte Licht in den Radialebenen.

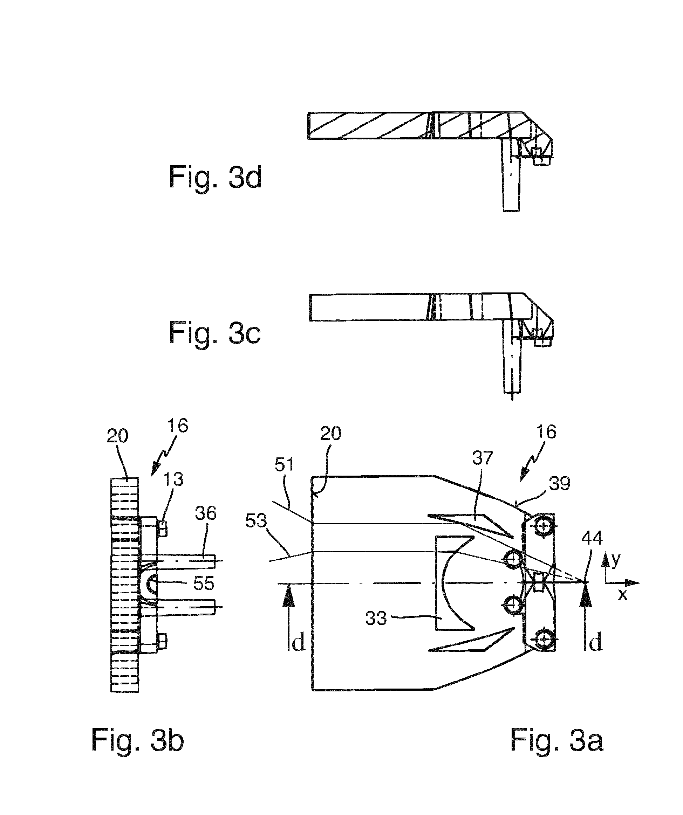

Figur 3 zeigt verschiedene Ansichten einer Lichtleiteranordnung vom Typ der in den Figuren 1 und 2 dargestellten Lichtleiteranordnung. Figur 3a zeigt eine Draufsicht auf die Lichtleiteranordnung 16. In der in dieser Ansicht sichtbaren Ebene besitzen die Lichtstrahlen relativ zueinander noch die Winkelverteilung, mit der sie in die Lichtleiteranordnung 16 eingetreten sind. Eine Parallelisierung erfolgt in diesen Ebenen durch die Umformoptiken 34, die hier als zentrale Luftlinse 33, als parabelförmige und intern totalreflektierende Grenzflächen innerer Ausnehmungen 37 und als parabelförmige und intern totalreflektierende Außenreflektoren 39 verwirklicht sind. Sämtliche Umformoptiken 34 besitzen bevorzugt den gleichen Brennpunkt, der geometrisch im virtuellen Bild 44 der im reellen Brennpunkt angeordneten Lichtquelle 14 liegt. Der Punkt, in dem sich die Lichtstrahlen 51, 53 der Figur 3a schneiden, ist der an der Umlenkfläche gespiegelte Ort der im reellen Brennpunkt angeordneten Lichtquelle. Sämtliche Umformoptiken 34 besitzen bevorzugt den gleichen Brennpunkt, der geometrisch im virtuellen Bild 44 der Lichtquelle liegt.

Figur 3b zeigt eine Vorderansicht der Lichtleiteranordnung 16 mit der Lichtaustrittsfläche 20. Die gestrichelte Struktur innerhalb der Lichtaustrittsfläche 20 bildet dort eingeformte Streuoptiken ab. Dies gilt analog für den gewellten Verlauf der Lichtaustrittsfläche 20 in Figur 3a. Die halbkreisförmigen Konturen stellen Kanten der Einkoppeloptik 16 dar. Figur 3c zeigt eine Seitenansicht der Lichtleiteranordnung und die Figur 3d zeigt einen Schnitt längs der Ebene d-d in Figur 3a. Die runden Konturen 55 sind Konturen der durch Rotation um die Rotationsachse 42 in Fig. 2 erzeugten Flächen.

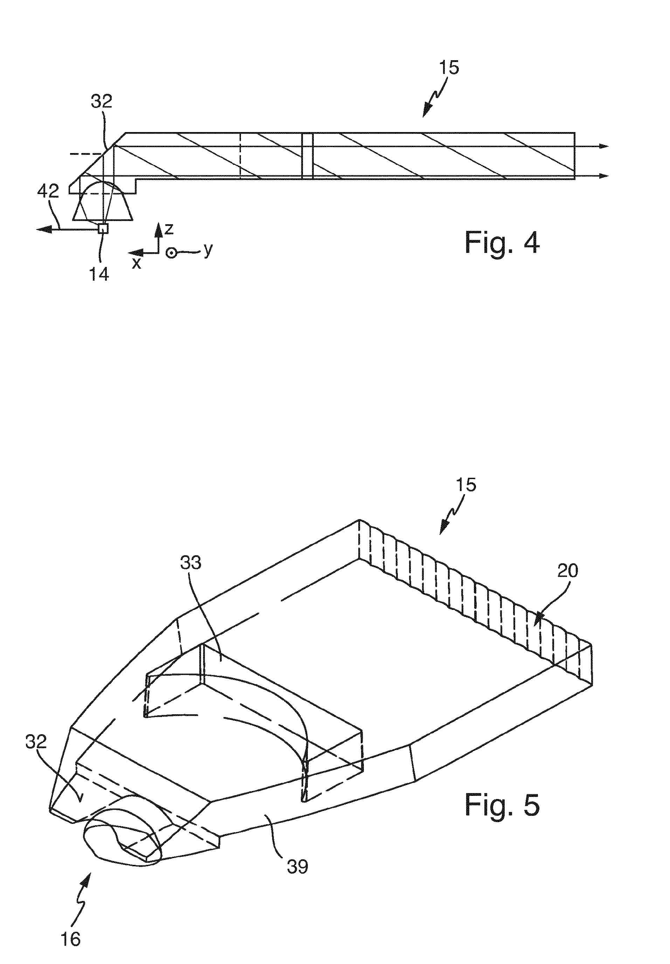

Figur 4 zeigt eine Ausgestaltung einer Lichtleiteranordnung mit einer Linse als Einkoppeloptik 16. Sowohl für die Ausgestaltung mit der Vorsatzoptik als auch für die Ausgestaltung mit der Linse gilt, dass die lichtbündelformende und im Raum gekrümmte Fläche in ersten Schnittebenen halbkreisförmige Kanten (z.b. die Kanten 55 in Figur 3b) besitzt, deren Kreismittelpunkte auf einer Achse 42 liegen, auf der auch die Lichtquelle 14 angeordnet ist. Die ersten Schnittebenen sind parallel zur Zeichnungsebene der Fig. 3b. Diese halbkreisförmigen Kanten sind z. B. in der Figur 3b als Kanten der Einkoppeloptik 16 sichtbar. Ebenfalls für beide genannten Ausgestaltungen gilt, dass diese Flächen in zweiten Schnittebenen eine linsenförmige Kontur aufweisen. Die zweiten Schnittebenen sind parallel zur Zeichnungsebene der Figuren 2 und 4. Dies zeigt Figur 2 für die Ausgestaltung mit der Vorsatzoptik und Figur 4 für die Ausgestaltung mit der Linse, die dort eine plan-konvexe Linse ist. Im Fall der Linse ist deren Lichtaustrittsfläche eine lichtbündelformende und im Raum gekrümmte Fläche. Im Fall der Vorsatzoptik ist deren zentrale Lichteintrittsfläche 22 eine solche lichtbündelformende und im Raum gekrümmte Fläche. Ferner sind im Fall der Vorsatzoptik auch deren seitliche Reflexionsflächen solche Lichtbündel formenden und im Raum gekrümmten Flächen.

Figur 5 zeigt eine perspektivische Ansicht einer eine Linse als Einkoppeloptik 16 aufweisenden Lichtleiteranordnung. Die Parallelisierung erfolgt in den Radialebenen durch die Linse. Die weitere Parallelisierung erfolgt nach der Umlenkung an der ebenen Umlenkfläche durch eine innere Luftlinse und durch die äußeren, parabelförmigen Konturen. Auch hier gilt wieder, dass die Umformoptiken den gleichen virtuellen Brennpunkt und den gleichen reellen Brennpunkt besitzen, wobei die Lichtquelle im reellen Brennpunkt angeordnet ist. Der virtuelle Brennpunkt ergibt sich durch Spiegelung des reellen Brennpunkts an der ebenen Umlenkfläche 32.

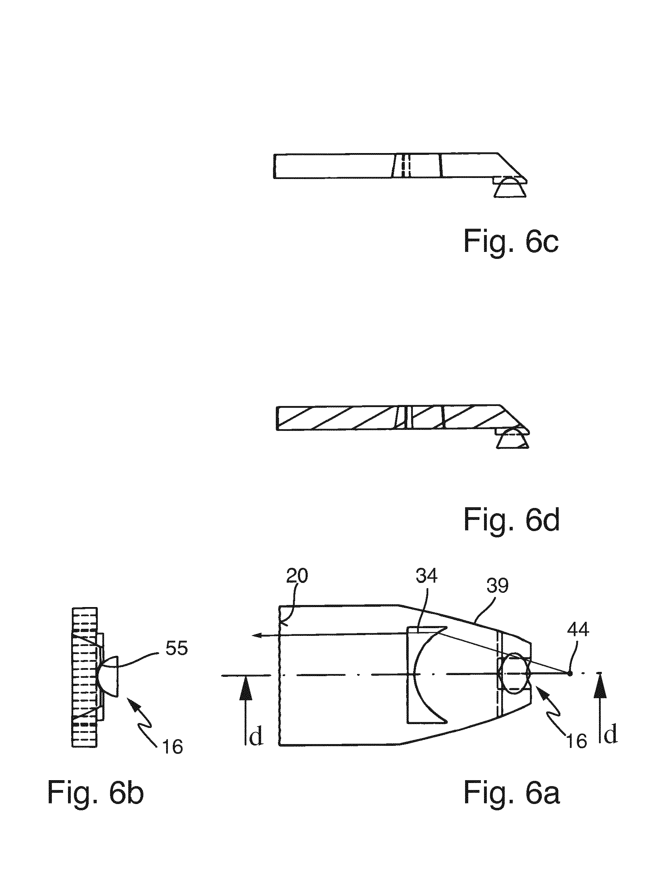

Figur 6 zeigt verschiedene Ansichten des Gegenstands der Figur 5. Figur 6a zeigt eine Draufsicht auf die Lichtleiteranordnung 15. In der in dieser Ansicht sichtbaren Ebene besitzen die Lichtstrahlen relativ zueinander noch die Winkelverteilung, mit der sie in die Lichtleiteranordnung 16 eingetreten sind. Insofern gilt hier auch die Erläuterung zu der Figur 3. Eine Parallelisierung erfolgt in diesen Ebenen durch die Umformoptiken 34, die hier als zentrale Luftlinse 34 und als parabelförmige und intern totalreflektierende Außenreflektoren 39 verwirklicht sind. Sämtliche Umformoptiken 34 besitzen bevorzugt den gleichen Brennpunkt, der geometrisch im virtuellen Bild 44 der im reellen Brennpunkt angeordneten Lichtquelle 14 liegt.

Figur 6b zeigt eine Vorderansicht der Lichtleiteranordnung mit der Lichtaustrittsfläche 20. Die gestrichelte Struktur innerhalb der Lichtaustrittsfläche 20 repräsentiert dort eingeformte Streuoptiken. Dies gilt analog für den gewellten Verlauf der Lichtaustrittsfläche 20 in Figur 6a. Die halbkreisförmigen Konturen 55 in der Fig. 6 b stellen Kanten der Einkoppeloptik 16 (hier: der Lichtaustrittsfläche einer Linse) dar. Figur 6c zeigt eine Seitenansicht der Lichtleiteranordnung und die Figur 6d zeigt einen Schnitt längs der Ebene d-d in Figur 6a.

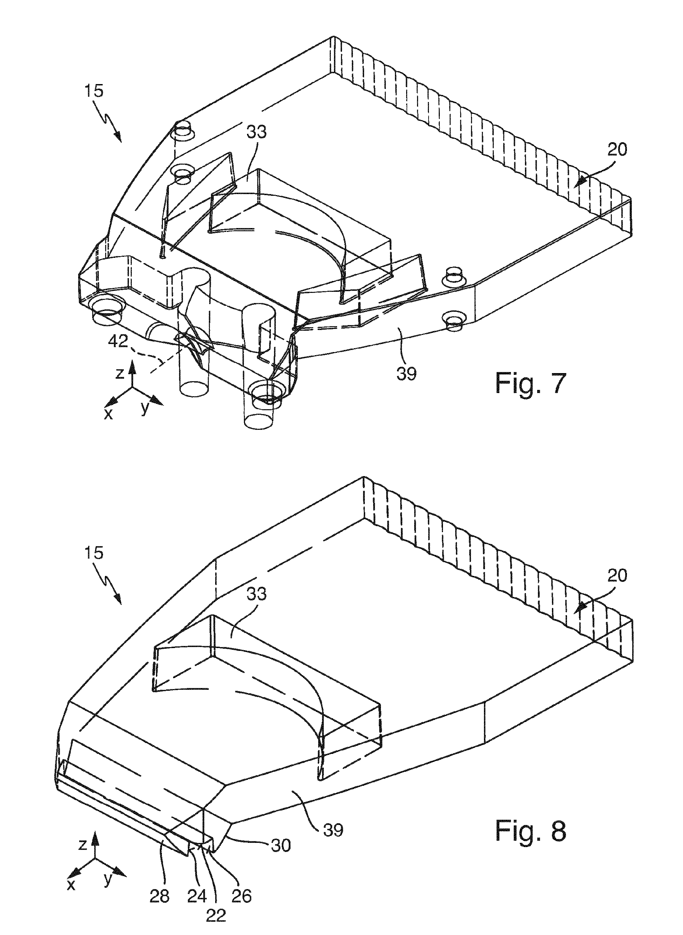

Figur 7 zeigt eine perspektivische Ansicht einer Lichtleiteranordnung, die eine Einkoppeloptik mit dem beschriebenen Vorsatzoptikprofil aufweist, das durch Rotation des Querschnitts aus Figur 2 erzeugt wird. Das in Figur 2 dargestellt Vorsatzoptikprofil ist hier über einen Winkel von 180°C um eine zur x-Achse parallele Rotationsachse 42 rotiert worden.

Figur 8 zeigt eine alternative Ausgestaltung einer Lichtleiteranordnung mit einem gegenüber der Figur 7 veränderten Vorsatzoptikprofil. Das Vorsatzoptikprofil der Figur 8 ergibt sich durch Extrudieren des Vorsatzoptikprofils nach Figur 2, also durch geradlinig erfolgendes Verschieben dieses Vorsatzoptikprofils längs der y-Richtung. Die Lichtverteilung in der y-z-Ebene unterscheidet sich dann von der Lichtverteilung des rotierten Profils nach Figur 7 dadurch, dass die Lichtverteilung beim extrudierten Profil stärker kollimiert ist als beim rotierten Profil. Genau genommen ist die Lichtverteilung beim rotierten Profil gar nicht kollimiert. Sie erstreckt sich über eine Winkelbreite von 180°C, bzw. über die volle Winkelbreite des eingekoppelten Lichts, wenn die Winkelbreite von dessen Lichtbündel kleiner als 180° ist.

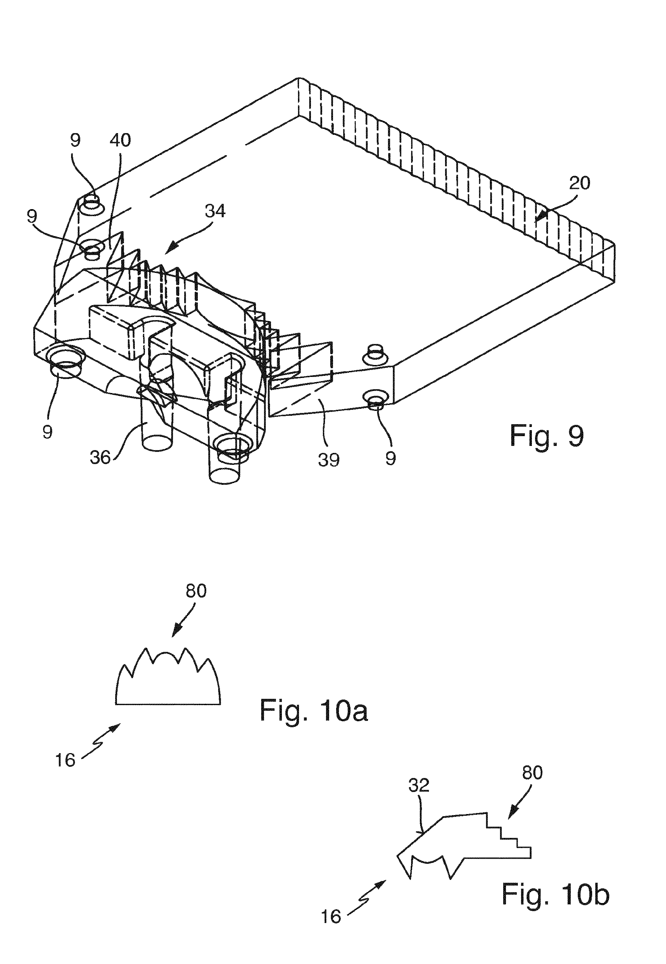

Figur 9 zeigt eine bevorzugte Ausgestaltung einer Lichtleiteranordnung in perspektivischer Ansicht, bei der eine als Umformoptik 34 dienende innere Luftlinse als Fresnel-Linse 40 verwirklicht ist. Für alle Ausgestaltungen gilt, dass die Einkoppelmodule auch als separate Komponente in der Lichtleiteranordnung eingesetzt werden können.

Figur 10 zeigt Ausgestaltungen separater Einkoppelmodule, die sich durch eine gestufte Lichtaustrittsfläche auszeichnen. Bei der Figur 10a ist die Lichtaustrittsfläche in der Ebene gestuft, in der sich das Licht noch radial ausbreitet. Dies ist zum Beispiel die Zeichnungsebene der Figur 3b. Bei der Figur 10b ist die Lichtaustrittsfläche in der Radialebene gestuft, in der bereits die erste Parallelisierung stattgefunden hat. Dies ist zum Beispiel die Zeichnungsebene der Figur 3d.

Beim Gegenstand der Figur 10 a ist die Lichtaustrittsfläche 80 der Einkoppeloptik 16 in eine Vielzahl von Einzelflächen unterteilt, die so angeordnet und geformt sind, dass die in den ersten Ebenen liegenden Ausbreitungsrichtungen des Lichts beim Durchtritt durch eine Einzelfläche infolge Brechung gezielt verändert werden.

Dadurch ist es möglich, dass ein Öffnungswinkel der in diesen Ebenen liegenden Ausbreitungsrichtungen des Lichts bereits beim Übergang von der Einkoppeloptik 16 in die Transport- und Umlenkoptik gezielt geändert wird. Die Transport- und Umformoptik kann dann weniger aufwändig gestaltet ausfallen, insbesondere können gegebenenfalls die Umformoptiken 34 entfallen.

In einer weiteren Ausgestaltung, die sich beim Gegenstand der Fig. 10 a durch eine Kombination mit einer als Negativ der Lichtaustrittsfläche 80 der Einkoppeloptik 26 geformten Lichteintrittsfläche der Transport- und Umformoptik ergibt, dienen die resultierenden Verzahnungen als Formschlusselemente zur genauen Positionierung und Halterung der Einkoppeloptik in der Transport-und Umformoptik.

Figur 10b zeigt eine weitere Ausgestaltung der Einkoppeloptik 16 in einer Schnittdarstellung parallel zu x-z-Ebene. In der dargestellten Ausgestaltung ist die Lichtauskoppelfläche 80 der Einkoppeloptik 16 in eine Vielzahl von Einzelflächen unterteilt. Die Einzelflächen sind dabei stufenartig übereinander angeordnet. Die stufenartige Anordnung der Einzelflächen ermöglicht eine formschlüssige Einpassung der Einkoppeloptik 16 in z-Achsenrichtung und x-Achsenrichtung in die Transport- und Umformoptik.

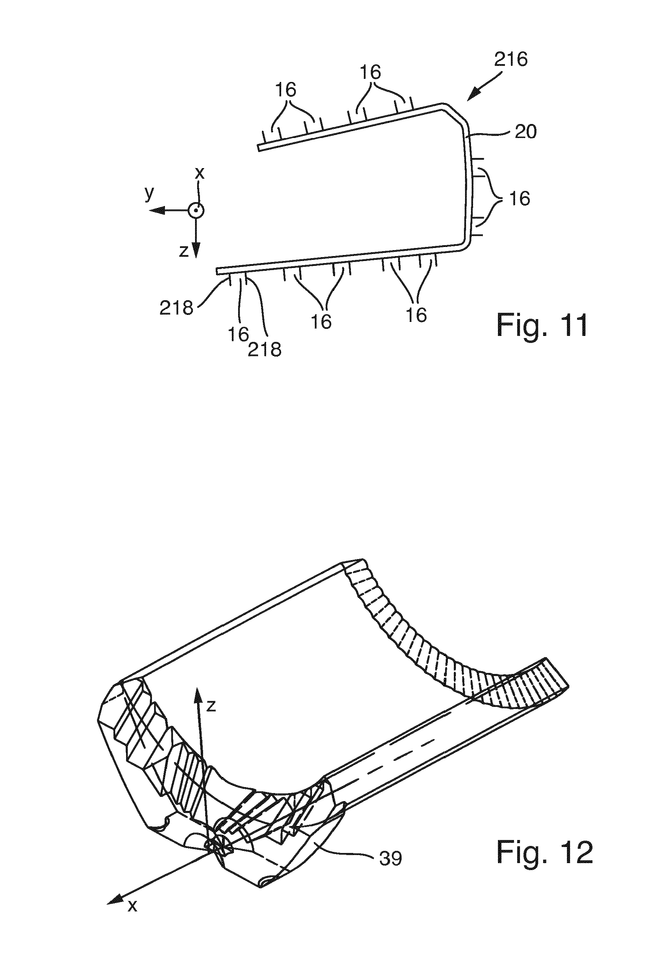

Figur 11 zeigt eine etwa U-förmige Ausführung der Lichtaustrittsfläche, die durch Aneinanderreihung vieler Lichtaustrittsflächen einzelner Lichtleiteranordnungen erzeugt wird. Allgemein gilt, dass eine solche Lichtaustrittsfläche einstückig oder mehrstückig verwirklicht werden kann, wobei in beiden Fällen mehrere Einkoppelmodule zur Einkopplung von Licht genutzt werden können. Die Figur 11 zeigt im Einzelnen einen Lichtleiter 216, bei dem die Lichtaustrittsfläche 20 u-förmig ausgeführt ist. Die Ansicht bietet sich einem Betrachter, der sich in der Abstrahlrichtung in einiger Entfernung von der Lichtaustrittsfläche entfernt befindet und auf die Lichtaustrittsfläche blickt. Der Lichtleiter 216 weist mehrere Einkoppeloptiken 16 auf. Man kann sich den Lichtleiter 226 als primär nebeneinander angeordnete Lichtleiteranordnungen 15 vorstellen, wobei einzelne dieser Lichtleiteranordnungen um die x-Ache herum gekrümmt sind, um die benötigten Bögen zu erzeugen. Jede der Einkoppeloptiken 16 weist eine ihr zugeordnete Lichtquelle auf. Der Lichtleiter 216 weist Halterungsstrukturen 218 auf, die dazu eingerichtet und angeordnet sind, die Lichtquellen mit dem Schaltungsträger und dem Kühlkörper am Lichtleiter zu befestigen. Die Einkoppeloptiken 16 sind längs der Lichtaustrittsfläche 20 des Lichtleiters verteilt, so dass eine gleichmäßige homogene Beleuchtung der kompliziert geformten bandartigen Lichtaustrittsfläche 20 mit nahezu parallelem Licht gewährleistet ist. Es versteht sich, dass damit auch andere langgestreckte und Krümmungen aufweisende Formen verwirklicht werden können.

Figur 12 zeigt eine Ausgestaltung, bei der mit einem der hier vorgestellten Einkoppelmodule, insbesondere mit dem vorsatzoptikartigen Einkoppelmodul und entsprechender Umlenkung eine gebogene Platte homogen ausgeleuchtet werden kann. Die Einkopplung erfolgt dabei auf eine der weiter oben beschriebenen Arten und Weisen. Anstelle einer rein ebenen Umlenkfläche wird hier im Bereich nahe der z-Achse ein um die x-Achse rotiertes 45°C-Prisma verwendet. Die Rotation kann man in mehreren Stufen ausführen, damit die Frontseite homogen ausgeleuchtet wird. Beim Gegenstand der

Figur 12 sind es insgesamt sieben solcher Stufen. Durch das um die x-Achse rotierte 45°C-Prisma wird das Licht nicht nur um 90°C umgelenkt, sondern auch noch parallelisiert. Um den weit von der z-Achse wegliegenden Außenbereich homogen auszuleuchten, benötigt man zwei Umlenkungen. Das nach außen parallel zur y-z-Ebene radial propagierende Licht wird im Außenbereich durch Totalreflexion an einem Parabelabschnitt 39 umgelenkt und in Richtung der z-Achse parallelisiert. Dieses Licht muss nun noch an weiteren Prismenabschnitten um 90°C von der z-Richtung in x-Richtung umgelenkt werden. Die darstellte Stufung wird zur Erzeugung der gewünschten Homogenität der Ausleuchtung der Lichtaustrittsfläche benötigt.

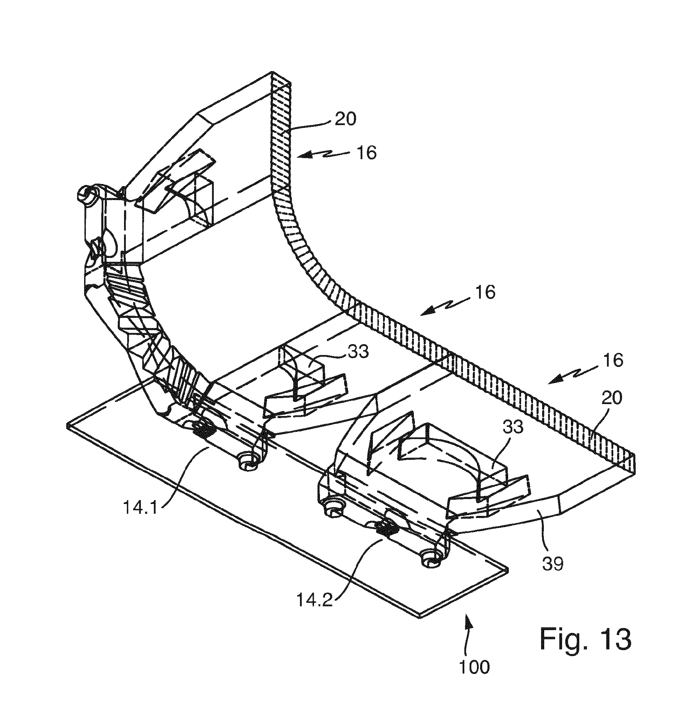

Figur 13 zeigt eine Lichtleiterplatte, die teilweise gebogen und teilweise eben ist. Eine solche Platte lässt sich durch Teilabschnitte der in der Figur 12 gezeigten Platte in Kombination mit den weiter vorne erläuterten ebenen Ausgestaltungen von Transport- und Umformoptiken erzeugen. Die Kombination erfolgt bevorzugt so, dass die Lichtquellen 14.1 für den gebogenen Bereich in der gleichen Ebene liegen, wie die Lichtquellen 14.2 für den jeweiligen ebenen Breich, sodass man starre Platinen 100 für den gebogenen und den ebenen Bereich verwenden kann. Diese sind preiswerter und lassen sich bei der Herstellung erfindungsgemäßer Beleuchtungseinrichtungen einfacher handhaben als flexible Leiterplatten.

## Patentansprüche

1. Kraftfahrzeugbeleuchtungseinrichtung mit einer Lichtquelle und einer Lichtleiteranordnung, die eine Einkoppeloptik und eine Transport- und Umformoptik aufweist, wobei die Transport- und Umformoptik eine Lichtaustrittsfläche aufweist und die Einkoppeloptik dazu eingerichtet ist, ein von der Lichtquelle ausgehendes Lichtbündel umzuformen und zur Transport- und Umformoptik zu richten, wobei die Einkoppeloptik wenigstens eine Lichtbündel formende und im Raum gekrümmte Fläche aufweist, die eine linsenförmige Kontur aufweist, welche den Öffnungswinkel des Lichtes beim Durchtritt durch diese Fläche reduziert, und wobei die Transport- und Umformoptik einen gemeinsamen Brennpunkt aufweisende Umformoptiken aufweist, und die Lichtquelle im gemeinsamen Brennpunkt angeordnet ist, **dadurch gekennzeichnet, dass** die Lichtquelle an einer der Lichtaustrittsfläche gegenüberliegenden Seite der Lichtleiteranordnung so angeordnet ist, dass sämtliche Licht der Lichtquelle leitenden Bereiche der Lichtleiteranordnung zwischen der Lichtquelle und der Lichtaustrittsfläche liegen und die Lichtleiteranordnung wenigstens eine ebene Umlenkfläche aufweist, die zwischen den im Raum gekrümmten Flächen der Einkoppeloptik und den Umformoptiken angeordnet ist.

2. Kraftfahrzeugbeleuchtungseinrichtung nach Anspruch 1, **dadurch gekennzeichnet, dass** die Lichtbündel formende und im Raum gekrümmte Fläche in ersten Schnittebenen halbkreisförmige Ränder besitzt, deren Mittelpunkte auf einer Achse liegen, auf der auch die Lichtquelle angeordnet ist, und welche Flächen in zweiten Schnittebenen eine linsenförmige Kontur aufweisen.

3. Kraftfahrzeugbeleuchtungseinrichtung nach einem der vorhergehenden Ansprüche, **dadurch gekennzeichnet, dass** die Einkoppeloptik eine Linse aufweist und die Lichtaustrittsfläche der Linse eine solche Lichtbündel formende und im Raum gekrümmte Flächen ist.

4. Kraftfahrzeugbeleuchtungseinrichtung nach einem der vorhergehenden Ansprüche, **dadurch gekennzeichnet, dass** die Einkoppeloptik eine Vorsatzoptik mit einer zentralen Lichteintrittsfläche, seitlichen Lichteintrittsflächen und seitlichen Reflexionsflächen aufweist, wobei die zentrale Lichteintrittsfläche eine solche Lichtbündel formende und im Raum gekrümmte Flächen ist.

5. Kraftfahrzeugbeleuchtungseinrichtung nach einem der vorhergehenden Ansprüche, **dadurch gekennzeichnet, dass** die Einkoppeloptik eine Vorsatzoptik mit einer zentralen Lichteintrittsfläche, seitlichen Lichteintrittsflächen und seitlichen Reflexionsflächen aufweist, wobei auch die seitliche Reflexionsfläche eine solche Lichtbündel formende und im Raum gekrümmte Fläche ist.

6. Kraftfahrzeugbeleuchtungseinrichtung nach einem der vorhergehenden Ansprüche, **dadurch gekennzeichnet, dass** die Einkoppeloptik und die Transport- und Umformoptik einstückig-stoffschlüssig zusammenhängende Bestandteile der Lichtleiteranordnung sind.

7. Kraftfahrzeugbeleuchtungseinrichtung nach einem der vorhergehenden Ansprüche, **dadurch gekennzeichnet, dass** die Einkoppeloptik und die Transport- und Umformoptik separate Komponenten sind, die zur Lichtleiteranordnung lösbar oder unlösbar zusammengefügt sind.

8. Kraftfahrzeugbeleuchtungseinrichtung nach einem der vorhergehenden Ansprüche, **dadurch gekennzeichnet, dass** die Umlenkfläche ein Bestandteil einer separaten Einkoppeloptik-Komponente der Lichtleiteranordnung ist.

9. Kraftfahrzeugbeleuchtungseinrichtung nach einem der vorhergehenden Ansprüche, **dadurch gekennzeichnet, dass** die Umlenkfläche ein Bestandteil einer separaten Transport- und Umformoptik-Komponente der Lichtleiteranordnung ist.

10. Kraftfahrzeugbeleuchtungseinrichtung nach einem der vorhergehenden Ansprüche, **dadurch gekennzeichnet, dass** die Umformoptiken eine zentrale Luftlinse aufweisen und/oder als parabelförmige und intern totalreflektierende Grenzflächen innerer Ausnehmungen und/oder als parabelförmige und intern totalreflektierende Außenreflektoren verwirklicht sind.

11. Kraftfahrzeugbeleuchtungseinrichtung nach einem der vorhergehenden Ansprüche, **dadurch gekennzeichnet, dass** sämtliche Umformoptiken den gleichen Brennpunkt besitzen.

12. Kraftfahrzeugbeleuchtungseinrichtung nach einem der vorhergehenden Ansprüche, **dadurch gekennzeichnet, dass** die Lichtaustrittsfläche eingeformte Streuoptiken aufweist.

13. Kraftfahrzeugbeleuchtungseinrichtung nach einem der vorhergehenden Ansprüche, **dadurch gekennzeichnet, dass** die Form eines räumlichen Vorsatzoptikprofils durch Extrudieren eines flächigen Vorsatzoptikprofils erzeugt wird.

14. Kraftfahrzeugbeleuchtungseinrichtung nach einem der vorhergehenden Ansprüche, **dadurch gekennzeichnet, dass** die Form eines räumlichen Vorsatzoptikprofils durch Rotieren eines flächigen Vorsatzoptikprofils erzeugt wird.

15. Kraftfahrzeugbeleuchtungseinrichtung nach einem der vorhergehenden Ansprüche, **dadurch gekennzeichnet, dass** eine als Umformoptik 34 dienende innere Luftlinse als Fresnel-Linse verwirklicht ist.

16. Kraftfahrzeugbeleuchtungseinrichtung nach einem der vorhergehenden Ansprüche, **dadurch gekennzeichnet, dass** die Lichtquelle mehrere Leuchtdioden aufweist, die gleichfarbiges Licht oder Licht unterschiedlicher Farbe erzeugen, wobei eine einzelne Leuchtdiode jeweils einfarbiges Licht erzeugt.
